# EUROPÄISCHE PATENTSCHRIFT

(11) **EP 1 501 879 B1**
(45) Veröffentlichungstag und Bekanntmachung des Hinweises auf die Patenterteilung: **18.02.2009**
(21) Anmeldenummer: 03720470.8
(22) Anmeldetag: 15.04.2003
(51) Int. Cl.: C08F 36/04, C08F 4/54, C08F 12/00, C08F 12/04, C08F 297/04, C07F 5/06

(54) **VERFAHREN ZUR ANIONISCHEN POLYMERISATION**
METHOD FOR ANIONIC POLYMERISATION
PROCEDE POUR LA POLYMERISATION ANIONIQUE

(30) Priorität: 23.04.2002 DE 10218161
(43) Veröffentlichungstag der Anmeldung: 02.02.2005
(73) Patentinhaber: BASF SE, 67056 Ludwigshafen (DE)
(72) Erfinder: DESBOIS, Philippe, 67487 Maikammer (DE); SCHADE, Christian, 67063 Ludwigshafen (DE); DEFFIEUX, Alain, F-33000 Bordeaux (FR); MENORET, Stephane, F-33800 Bordeaux (FR); DEMETER, Jürgen, 67069 Ludwigshafen (DE)
(86) Internationale Anmeldenummer: PCT/EP2003/003900
(87) Internationale Veröffentlichungsnummer: WO 2003/091296

(56) Entgegenhaltungen:
- EP-A- 0 512 310
- WO-A-98/07765
- GB-A- 947 993
- US-A- 2 915 541
- US-A- 3 453 093

## Beschreibung

Die Erfindung betrifft eine Initiatorzusamanensetzung für die anionische Polymerisation, enthaltend mindestens ein Alkalimetallhydrid ausgewählt aus LiH, NaH und KH, und mindestens ein Aluminiumorganyl.

Weiterhin betrifft die Erfindung ein Verfahren zur Herstellung der Initiatorzusammensetzung, und ein Verfahren zur anionischen Homo- oder Copolymerisation von Styrolmonomeren oder Dienmonomeren in Gegenwart der Initiatorzusammensetzung, sowie die Verwendung der Initiatorzusammensetzung zur Herstellung von Polymeren. Schließlich betrifft die Erfindung die nach dem Verfahren erhältlichen Polymere, deren Verwendung zur Herstellung von Formkörpern, Folien, Fasern und Schäumen, und die Formkörper, Folien, Fasern und Schäume aus den Polymeren.

Die anionische Polymerisation verläuft in der Regel sehr schnell, so daß eine Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringen Raum-Zeit-Ausbeuten.

Es wurden daher verschiedene Zusätze zu den anionischen Polymerisationsinitiatoren vorgeschlagen, die die Polymerisationsgeschwindigkeit beeinflussen.

Über den Einfluss von Lewissäuren und Lewisbasen auf die Geschwindigkeit der anionischen Polymerisation von Styrol wurde in Welch, Journal of the American Chemical Society, Vol. 82 (1960), Seite 6000-6005 berichtet. So wurde gefunden, daß geringe Mengen von Lewis-Basen wie Ether und Amine die durch n-Butyllithium initiierte Polymerisation von Styrol bei 30°C in Benzol beschleunigen, wohingegen Lewis-Säuren wie Zink- und Aluminiumalkyle die Polymerisationsgeschwindigkeit reduzieren bzw. in überstöchiometrischen Mengen die Polymerisation zum Stillstand bringen.

Die US-PS 3655790 beschreibt Organomagnesium-Alkalimetallhydrid-Komplexe MₙMgR¹R²Hₙ mit M = Na, K, Li, Cs; R¹ und R² = C₃₋₁₅-Alkyl, -Aryl, -Aralkyl; n = 1/2, 1, 2, 3, und ihre Verwendung als Reduktions- und Metallierungsmittel.

Die US-PS 3691241 und 3817955 offenbaren ein Verfahren zur Polymerisation verschiedener Monomeren, u.a. Butadien, Isopren und Styrol, unter Verwendung der in der US-PS 3655790 beschrieben Organomagnesium-Alkalimetallhydrid-Komplexe.

Im Gegensatz den vorstehend offenbarten Metallkomplexen enthalten die erfindungsgemäßen Initiatorzusammensetzungen kein Magnesium und keine Magnesiumorganyle.

In der DE-A 19806772 werden Initiatorzusammensetzungen aus einem Alkalimetallorganyl (d.h. Alkalimetallalkyl, -aryl oder -aralkyl) wie z.B. sec.-Butyllithium, und einem Aluminiumorganyl wie z.B. Triisobutylaluminium (TIBA) offenbart, sowie deren Verwendung zur Polymerisation von Vinylaromaten und Dienen.

Die US-PS 3716495 lehrt Initiatorzusammensetzungen aus a) Organolithiumverbindungen RLiₓ mit R = C₁₋₂₀-Alkyl, -Aryl, -Cycloalkyl, -Alkaryl oder -Aralkyl wie etwa n- oder sec.-Butyllithium, b) Metallorganylen RₙM mit R wie vorstehend definiert und M = Metall aus den Gruppen 2a (Erdalkalimetalle), 2b (Zinkgruppe) und 3a (Borgruppe), wie z.B. Diethylzink oder Aluminiumorganyle, und c) polaren Verbindungen wie Tetrahydrofuran (THF). Sie werden zur Polymerisation von Dienen und Vinylaromaten verwendet.

Nachteilig an der Verwendung von Initiatoren, die Organolithiumverbindungen (Lithiumorganyle) wie n-, sec.- oder tert.-Butyllithium enthalten, ist der hohe Preis der Lithiumorganyle, der das Polymer-Endprodukt verteuert.

Im Unterschied zu den beiden vorstehend offenbarten Initiatorzusammensetzungen enthalten die erfindungsgemäßen Initiatoren Alkalimetallhydride ohne Organylreste.

Die WO-A 98/07765 offenbart Initiatoren für die anionische Polymerisation, enthaltend die Metallorganyle
- R¹M¹ mit: M¹ = Li,Na,K
R¹ = Wasserstoff, C₁₋₁₀-Alkyl, C₆₋₂₀-Aryl, C₇₋₂₀ alkyl-substituiertes Aryl, und
- R²ₙM² mit: M² = n-wertiges Element der Gruppen 2a, 2b, oder 3a des Periodensystems,
R² = Wasserstoff, Halogen, C₁₋₂₀-Alkyl, C₆₋₂₀-Aryl.

Außerdem wird ein entsprechendes Polymerisationsverfahren für Styrol- oder Dienmonomere offenbart.

Die vorliegende Erfindung stellt eine Auswahlerfindung gegenüber der WO-A 98/07765 dar, indem für R¹ allein Wasserstoff und für M² allein Aluminium ausgewählt wurde.

Es bestand die Aufgabe, alternative Initiatorzusammensetzungen für die anionische Polymerisation (insbesondere von Styrolmonomeren oder Dienmonomeren) bereitzustellen. Außerdem sollte ein alternatives anionisches Polymerisationsverfahren für Styrole und Diene bereitgestellt werden. Die Initiatorzusammensetzungen bzw. das Verfahren sollte eine bessere Wirtschaftlichkeit aufweisen als die Verfahren des Standes der Technik.

Demgemäß wurden die eingangs erwähnten Initiatorzusammensetzungen, Verfahren und Verwendungen gefunden. Außerdem wurden die dort genannten Polymere, deren Verwendung, sowie die Formkörper, Folien, Fasern und Schäume gefunden.

Bevorzugte Ausführungsformen der Erfindung sind den Unteransprüchen zu entnehmen.

Die erfindungsgemäße Initiatorzusammensetzung enthält mindestens ein Alkalimetallhydrid ausgewählt aus Lithiumhydrid LiH, Natriumhydrid NaH und Kaliumhydrid KH, sowie mindestens ein Aluminiumorganyl (Organoaluminiumverbindung).

Es besteht die Vorstellung, daß das Alkalimetallhydrid als Initiator der anionischen Polymerisation z.B. von Styrolmonomeren wirkt, sofern es im Lösungsmittel (üblicherweise unpolare, inerte Kohlenwasserstoffe) gelöst vorliegt. Das Aluminiumorganyl verbessert die Löslichkeit des Alkalimetallhydrids im Lösungsmittel, vermutlich durch Komplexbildung, und verbessert so die Wirksamkeit des Alkalimetallhydrids. Außerdem verlangsamt das Al-organyl die Polymerisationsgeschwindigkeit der Monomeren (sog. Retarder-Wirkung).

Die Alkalimetallhydride können in an sich bekannter Weise aus dem entsprechenden Metallen und Wasserstoffgas unter Druck und bei erhöhter Temperatur hergestellt werden. Sie sind jedoch auch in Chemikalienhandel erhältlich, beispielsweise als reiner Feststoff oder suspendiert in einem Lösungsmittel.

Die benötigte Menge an Alkalimetallhydrid richtet sich u.a. nach dem gewünschten Molekulargewicht (Molmasse) des Polymeren, das hergestellt werden soll, nach Art und Menge der verwendeten Aluminiumorganyle, und nach der Polymerisationstemperatur. In der Regel verwendet man 0,0001 bis 10, bevorzugt 0,001 bis 1 und besonders bevorzugt 0,01 bis 0,2 Mol-% Alkalimetallhydrid, bezogen auf die Gesamtmenge der eingesetzten Monomeren.

Als Aluminiumorganyle können Monoorganyle RH₂Al, Diorganyle R₂HAl und - bevorzugt - Triorganyle R₃Al verwendet werden. Dabei können die Reste R gleich oder verschieden sein und unabhängig voneinander Wasserstoff, Halogen, C₁-C₂₀-Alkyl, C₆-C₂₀-Aryl oder C₇-C₂₀-alkylsubstituiertes Aryl bedeuten. Bevorzugte Aluminiumorganyle sind die Aluminiumtrialkyle wie Triethylaluminium, Tri-isobutylaluminium, Tri-n-butylaluminium, Triisopropylaluminium, Tri-n-hexylaluminium. Besonders bevorzugt wird Triisobutylaluminium (TIBA) eingesetzt.

Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen oder die Alkoholat-, Thiolat-, Amid-, Imid-, oder Phosphide-Gruppen tragen. Beispiele sind Diethylaluminium-(N,N-dibutylamid), Diethylaluminium-ethoxid, Diisobutylaluminium-ethoxid, Diisobutyl-(2,6-di-tert.-butyl-4-methyl-phenoxy)-aluminium (CAS-Nr. 56252-56-3), Methylaluminoxan, isobutyliertes Methylaluminoxan, Isobutylaluminoxan, Tetraisobutyldialuminoxan oder Bis (diisobutyl)aluminiumoxid.

Die Aluminiumorganyle sind in an sich bekannter Weise erhältlich oder können als Handelsprodukte bezogen werden.

Die benötigte Menge an Aluminiumorganyl richtet sich u.a. nach Art und Menge der verwendeten Alkalimetallhydride, und nach der Polymerisationstemperatur. Üblicherweise verwendet man 0,0001 bis 10, bevorzugt 0,001 bis 1 und besondere 0,01 bis 0,2 Mol-% Aluminiumorganyl, bezogen auf die Gesamtmenge der eingesetzten Monomeren.

Das molare Verhältnis von Alkalimetallhydrid (Initiator) zu Aluminiumorganyl (Retarder) kann in weiten Grenzen variieren. Es richtet sich z.B. nach der gewünschten Retardierungswirkung, der Polymerisationstemperatur, der Art und Menge (Konzentration) der eingesetzten Monomeren, und dem gewünschten Molekulargewicht des Polymeren.

Zweckmäßigerweise drückt man das genannte molare Verhältnis als Molverhältnis von Aluminium zu Alkalimetall, Al/Li bzw. Al/Na bzw. Al/K, aus. Es beträgt 0,01:1 bis 5:1, bevorzugt 0,1:1 bis 2:1 und insbesondere 0,5:1 bis 1:1.

Zur Herstellung der Initiatorzusammensetzung vermischt man üblicherweise das Alkalimetallhydrid und das Aluminiumorganyl, bevorzugt unter Mitverwendung eines Lösungs- bzw. Suspendierungsmittels (je nach der Löslichkeit des Alkalimetallhydrids bzw. des Aluminiumorganyls, nachfolgend zusammenfassend als Lösungsmittel bezeichnet).

Als Lösungsmittel eignen sich insbesondere inerte Kohlenwasserstoffe, genauer aliphatische, cycloaliphatische oder aromatische Kohlenwasserstoffe, wie etwa Cyclohexan, Methylcyclohexan, Pentan, Hexan, Heptan, Isooctan, Benzol, Toluol, Xylol, Ethylbenzol, Dekalin oder Paraffinöl, oder deren Gemische. Toluol ist besonders bevorzugt.

In einer bevorzugten Ausführungsform setzt man das Alkalimetallhydrid als solches, d.h. als trockenen Feststoff ein. In einer anderen bevorzugten Ausführungsform setzt man das Aluminiumorganyl gelöst in einem inerten Kohlenwasserstoff, z.B. Toluol, ein.

Die Temperatur bei der Herstellung der Initiatorzusammensetzung hängt von der Konzentration, der Art der Metallverbindungen und dem Lösungsmittel ab. In der Regel ist der gesamte Temperaturbereich zwischen Gefrierpunkt und Siedepunkt der Mischung geeignet. Zweckmäßigerweise arbeitet man im Bereich von 0 bis 250°C, bevorzugt im Bereich von 20 bis 200°C.

Die Reifung oder Alterung der frisch hergestellten Initiatorzusammensetzung ist wichtig für den reproduzierbaren Einsatz in der anionischen Polymerisation. Versuche haben gezeigt, daß Initiatorkomponenten, die getrennt voneinander verwendet oder nur kurz vor der Polymerisationsinitiierung vermischt werden, schlecht reproduzierbare Polymerisationsbedingungen und Polymereigenschaften hervorrufen. Der beobachtete Alterungsprozess ist vermutlich auf eine Komplexbildung der Metallverbindungen zurückzuführen, die langsamer als der Mischungsvorgang abläuft.

Für die oben angegebenen Konzentrations- und Temperaturbereich reicht in der Regel eine Reifungszeit von etwa 2 Minuten aus. Bevorzugt läßt man die homogene Mischung mindestens 5 Minuten, insbesondere mindestens 20 Minuten reifen. Es ist in der Regel aber auch nicht abträglich, wenn man die homogene Mischung mehrere Stunden, z.B. 1 bis 480 Stunden reifen läßt.

Es ist auch möglich, daß man der Initiatorzusammensetzung zusätzlich Styrol zugibt. In diesem Fall erhält man ein oligomeres Polystyrylanion, an dessen Kettenende die Metallorganyle komplexiert sind. Bevorzugt verwendet man Styrol in Mengen im Bereich von 10 bis 1000 mol-%, bezogen auf das Alkalimetallhydrid.

Die Mischung der Initiatorkomponenten kann in jedem Mischaggregat durchgeführt werden, vorzugsweise in solchen, die mit Inertgas beaufschlagt werden können. Beispielsweise eignen sich Rührreaktoren mit Ankerrührer oder Schüttelbehälter. Für die kontinuierliche Herstellung eigen sich besonders beheizbare Rohre mit statischen Mischelementen. Der Mischvorgang ist für eine homogene Vermischung der Initiatorkomponenten notwendig. Während der Reifung kann aber muß nicht weitergemischt werden. Die Reifung kann auch in einem kontinuierlich durchströmten Rührkessel oder in einem Rohrabschnitt erfolgen, dessen Volumen zusammen mit der Durchströmgeschwindigkeit die Reifezeit festlegt.

Gegenstand der Erfindung ist demnach auch ein Verfahren zur Herstellung einer Initiatorzusammensetzung enthaltend mindestens ein Alkalimetallhydrid ausgewählt aus LiH, NaH und KH, und mindestens ein Aluminiumorganyl, wobei man das Alkalimetallhydrid und das in einem inerten Kohlenwasserstoff gelöste Aluminiumorganyl vermischt und die Mischung bei einer Temperatur von 0 bis 120°C mindestens 2 Minuten lang reifen lässt.

Ein weiterer Gegenstand der Erfindung ist ein Verfahren zur anionischen Homo- oder Copolymerisation von Styrolmonomeren oder Dienmonomeren oder deren Mischungen in Gegenwart einer Initiatorzusammensetzung, wobei die Initiatorzusammensetzung mindestens ein Alkalimetallhydrid ausgewählt aus LiH, NaH und KH, und mindestens ein Aluminiumorganyl, enthält. Es handelt sich demnach um ein Verfahren, bei dem die erfindungsgemäße Initiatorzusammensetzung verwendet wird.

Als Styrolmonomere sind alle vinylaromatischen Monomere geeignet, z.B. Styrol, p-Methylstyrol, p-tert-Butylstyrol, Ethylstyrol, Vinylstyrol, Vinylnaphthalin und 1,1-Diphenylethylen. Bevorzugt verwendet man Styrol.

Als Dienmonomere kommen z.B. 1,3-Butadien, 2,3-Dimethylbutadien, 1,3-Pentadien, 1,3-Hexadien, Isopren und Piperylen in Betracht. 1,3-Butadien und Isopren sind bevorzugt, insbesondere 1,3-Butadien (nachfolgend kurz Butadien). Zweckmäßigerweise setzt man die Monomeren in der verfahrenstypisch erforderlichen Reinheit ein, d.h. man entfernt störende Begleitstoffe wie Restfeuchte, polare Stoffe, Sauerstoff unmittelbar vor der Polymerisation in an sich bekannter Weise.

Man kann eine Art oder mehrere Arten Monomere verwenden, d.h. das Verfahren eignet sich zur Homopolymerisation und zur Copolymerisation.

Zusätzlich kann man bei der Polymerisationsreaktion polare Verbindungen bzw. Lewis-Basen mitverwenden. Es sind grundsätzlich alle literaturbekannten Additive der anionischen Polymerisation geeignet. Sie enthalten im allgemeinen mindestens ein O-, N-, S- oder P-Atom, das über ein freies Elektronenpaar verfügt. Bevorzugt sind Ether und Amine, z.B. Tetrahydrofuran, Diethylether, Tetrahydropyran, Dioxan, Kronenether, Alkylenglykoldialkylether, z.B. Ethylenglykolmonoethylether, Ethylenglykoldimethylether, N,N,N',N'-Tetramethylethylendiamin, N,N,N',N",N"-Pentamethyldiethylen-triamin, 1,2-Bis (piperidino) ethan, Pyridin, N,N,N',N',N",N"-Hexamethyltriethylentriamin und Phosphorsäurehexamethyltriamid.

Die polaren Verbindungen bzw. Lewis-Basen wirken als Aktivator und erhöhen in vielen Fällen den Umsatz der Polymerisationsreaktion bzw. steigern die Reaktionsgeschwindigkeit. Sie vermögen außerdem die Anteile der verschiedenen Vinylverknüpfungen im Butadien- bzw. Isopren-Polymeren zu steuern, siehe weiter unten, und damit die Mikrostruktur des Kautschuks zu beeinflussen. Falls sie die Reaktionsgeschwindigkeit erhöhen, ist ihre Menge zweckmäßigerweise so zu bemessen, daß die Reaktionsgeschwindigkeit des gesamten Ansatzes kleiner ist als in einem Ansatz, der ohne Zusatz der retardierenden Komponenten durchgeführt wird. Dazu verwendet man weniger als 500 Mol-%, bevorzugt weniger als 200 Mol-% und insbesondere weniger als 100 Mol-% der polaren Verbindung bzw. Lewis-Base, bezogen auf die Initiatorzusammensetzung.

Das erfindungsgemäße Verfahren kann in Anwesenheit (Lösungspolymerisation) oder in Abwesenheit (Massepolymerisation) eines Lösungsmittels durchgeführt werden. Ohne Lösungsmittel arbeitet man in der Regel bei Temperaturen über 100°C, bei denen sich auch Schmelzen von Polymeren handhaben lassen.

Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Isooctan, Dekalin, Benzol, Alkylbenzole wie Toluol, Xylol, Ethylbenzol oder Cumol oder geeignete Gemische. Das Lösungsmittel sollte die verfahrenstypisch erforderliche Reinheit aufweisen. Zur Abtrennung protonenaktiver Substanzen kann es beispielsweise über Aluminiumoxid oder Molekularsieb getrocknet und/oder vor Verwendung destilliert werden. Vorzugsweise wird das Lösungsmittel aus dem Verfahren nach Kondensation der Lösungsmittelgase und der genannten Reinigung wiederverwendet.

Bei der Lösungspolymerisation arbeitet man üblicherweise bei Temperaturen von 0 bis 250, bevorzugt 20 bis 200°C.

Durch die Auswahl von Zusammensetzung und Menge der Aluminiumorganyle ist es möglich, die Retardierungswirkung in weiten Temperaturbereichen einzustellen. So kann auch bei anfänglichen Monomerkonzentrationen im Bereich von 50 bis 100 Volumenprozent, insbesondere von 70 bis 100 Volumenprozent polymerisiert werden, die zu hochviskosen Polymerlösungen führen und zumindest bei höheren Umsätzen höhere Temperaturen verlangen.

Nach Beendigung der Polymerisation können die lebenden Polymerketten mit einem Kettenabbruchmittel verschlossen werden. Als Kettenabbruchmittel eignen sich protonenaktive Substanzen oder Lewis-Säuren wie beispielsweise Wasser, Alkohole wie Methanol oder Isopropanol, aliphatische und aromatische Carbonsäuren sowie anorganische Säuren wie Kohlensäure oder Borsäure.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das Verfahren führt je nach Wahl der Initiatorkonzentration und -zusammensetzung, des speziell angewandten Verfahrensablaufs und anderer Parameter, wie Temperatur und evtl. Temperaturverlauf, zu Polymerisaten mit hohem oder niedrigem Molekulargewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Neben dem vorstehend beschriebenen Verfahren zur Polymerisation und der Verwendung der Initiatorzusammensetzung zur Herstellung von Polymeren betrifft die Erfindung ebenso die nach dem Polymerisationsverfahren erhältlichen Polymere.

Solche Polymere sind beispielsweise Homopolymere wie Polystyrol (PS bzw. GPPS für general purpose polystyrene), Polybutadien (PB) und Polyisopren (PI). Als Copolymere sind z.B. schlagzähes Polystyrol (high impact polystyrene, HIPS) und Styrol-Butadien-Blockcopolymere (S-B-Polymere oder kurz P-S-B) zu nennen.

Das erfindungsgemäße Verfahren erlaubt demnach die Herstellung von thermoplastischen Formmassen (z.B. PS oder HIPS) und von Elastomeren (z.B. PB, PI, P-S-B).

Die erfindungsgemäßen Styrol-Butadien-Blockcopolymere können z.B. lineare Zweiblock-Copolymere S-B oder Dreiblock-Copolymere S-B-S bzw. B-S-B sein (S = Styrolblock, B = Butadienblock), wie man sie durch anionische Polymerisation nach dem erfindungsgemäßen Verfahren erhält. Die Blockstruktur entsteht im wesentlichen dadurch, daß man zunächst Styrol alleine anionisch polymerisiert, wodurch ein Styrolblock entsteht. Nach Verbrauch der Styrolmonomere wechselt man das Monomere, indem man monomeres Butadien zufügt und anionisch zu einem Butadienblock polymerisiert (sog. sequentielle Polymerisation). Das erhaltene Zweiblockpolymere S-B kann durch erneuten Monomerenwechsel auf Styrol zu einem Dreiblockpolymeren S-B-S polymerisiert werden, falls gewünscht. Entsprechendes gilt sinngemäß für Dreiblockcopolymere B-S-B.

Bei den Dreiblockcopolymeren können die beiden Styrol-Blöcke gleich groß (gleiches Molekulargewicht, also symmetrischer Aufbau S₁-B-S₁) oder verschieden groß (unterschiedliches Molekulargewicht also asymmetrischer Aufbau S₁-B-S₂) sein. Gleiches gilt sinngemäß für die beiden Butadien-Blöcke der Blockcopolymere B-S-B. Selbstverständlich sind auch Blockabfolgen S-S-B bzw. S₁-S₂-B, oder S-B-B bzw. S-B₁-B₂, möglich. Vorstehend stehen die Indices für die Blockgrößen (Blocklängen bzw. Molekulargewichte). Die Blockgrößen hängen beispielsweise ab von den verwendeten Monomermengen und den Polymerisationsbedingungen.

Anstelle der kautschukelastischen "weichen" Butadienblöcke B oder zusätzlich zu den Blöcken B können auch Blöcke B/S stehen. Sie sind ebenfalls weich und enthalten Butadien und Styrol, beispielsweise statistisch verteilt oder als tapered-Struktur (tapered = Gradient von Styrol-reich nach Styrol-arm oder umgekehrt). Falls das Blockcopolymere mehrere B/S-Blöcke enthält, können die Absolutmengen, und die relativen Anteile, an Styrol und Butadien in den einzelnen B/S-Blöcken gleich oder verschieden (ergebend unterschiedliche Blöcke (B/S)₁, (B/S)₂, etc.) sein.

Als Styrol-Butadien-Blockcopolymere sind auch Vier- und Polyblockcopolymere geeignet.

Die genannten Blockcopolymere können eine (vorstehend beschriebene) lineare Struktur aufweisen. Jedoch sind auch verzweigte oder sternförmige Strukturen möglich und für manche Anwendungen bevorzugt. Verzweigte Blockcopolymere erhält man in bekannter Weise, z.B. durch Pfropfreaktionen von polymeren "Seitenästen" auf eine Polymer-Hauptkette.

Sternförmige Blockcopolymere sind z.B. durch Umsetzung der lebenden anionischen Kettenenden mit einem mindestens bifunktionellen Kopplungsmittel gebildet. Solche Kopplungsmittel werden etwa in den US-PS 3 985 830, 3 280 084, 3 637 554 und 4 091 053 beschrieben. Bevorzugt sind epoxidierte Glyceride (z. B. epoxidiertes Leinsamenöl oder Sojaöl), Siliciumhalogenide wie SiCl₄, oder auch Divinylbenzol, außerdem polyfuktionelle Aldehyde, Ketone, Ester, Anhydride oder Epoxide. Speziell für die Dimerisierung eignen sich auch Dichlordialkylsilane, Dialdehyde wie Terephthalaldehyd und Ester wie Ethylformiat. Durch Kopplung gleicher oder verschiedener Polymerketten kann man symmetrische oder asymmetrische Sternstrukturen herstellen, d.h. die einzelnen Sternäste können gleich oder verschieden sein, insbesondere verschiedene Blöcke S, B, B/S bzw. unterschiedliche Blockabfolgen enthalten. Weitere Einzelheiten zu sternförmigen Blockcopolymeren sind beispielsweise der WO-A 00/58380 zu entnehmen.

Die vorstehend gebrauchten Monomerbezeichnungen Styrol bzw. Butadien stehen beispielhaft auch für andere Vinylaromaten bzw. Diene.

Erfindungsgemäß sind die Styrol-Butadien-Blockcopolymere, solange mindestens ein Block nach dem erfindungsgemäßen Verfahren hergestellt wurde. D.h. es müssen nicht alle Blöcke nach dem erfindungsgemäßen Verfahren hergestellt werden. Beispielsweise kann man mindestens einen Block mit einer erfindungsgemäßen Initiatorzusammensetzung enthaltend Alkalimetallhydrid und Aluminiumorganyl polymerisieren, und einen oder mehrere andere Blöcke desselben Blockcopolymers nach einem anderen, nicht erfindungsgemäßen Verfahren, etwa mit Organolithiumverbindungen oder Organomagnesiumverbindungen, herstellen.

Das erfindungsgemäße schlagzähe Polystyrol (HIPS) enthält neben der Polystyrolmatrix als Kautschukkomponente z. B. Polybutadien, Polyisopren, oder - bevorzugt - Styrol-Butadien-Blockcopolymere.

Dabei kann man die Kautschukkomponente nach dem erfindungsgemäßen Verfahren herstellen, oder auch nach Verfahren des Standes der Technik, z.B. durch anionische Polymerisation unter Verwendung von Organolithiumverbindungen oder durch radikalische Polymerisation.

Bei durch anionische Polymerisation hergestellten Kautschuken liegt der Kautschuk in der Regel gelöst in einem Lösungsmittel oder monomerem Styrol vor. Beim erfindungsgemäßen Verfahren brauchen die Kautschuke nicht vom Lösungsmittel abgetrennt zu werden (obwohl auch dies möglich ist). Vielmehr kann man die Lösung des Kautschuks mitsamt Lösungsmittel direkt zum HIPS weiterverarbeiten.

Dazu wird zu der Kautschuklösung, die ggf. zuvor durch Zusatz von Kettenabbruchmittel ausreagieren gelassen wurde, monomeres Styrol und die erfindungsgemäße Initiatorzusammensetzung gegeben, und die Mischung nach dem erfindungsgemäßen Verfahren anionisch polymerisiert, d.h. man polymerisiert Styrol in Gegenwart des Kautschuks.

Erfindungsgemäßes Polymer ist auch ein HIPS enthaltend erfindungsgemäß hergestelltem Kautschuk, wobei die Styrolmatrix nach einem anderen als dem erfindungsgemäßen Verfahren in Gegenwart des Kautschuks polymerisiert wurde.

Demnach umfasst das erfindungsgemäße HIPS solche HIPS-Polymere, bei denen entweder die Kautschukkomponente oder die Styrolmatrix oder beide Bestandteile nach dem erfindungsgemäßen Verfahren hergestellt wurden.

Erfindungsgemäß besonders bevorzugt sind schlagzähe Polystyrolformmassen, enthaltend als Kautschuk
a) ein Styrol-Butadien-Zweiblockcopolymer S₁-B₁ mit einem Styrolanteil von 30 bis 70, bevorzugt 40 bis 60 Gew.-%, bezogen auf das Zweiblockcopolymer, oder
b) eine Mischung aus dem unter a) beschriebenen Zweiblockcopolymer mit einem zweiten Styrol-Butadien-Zweiblockcopolymer S₂-B₂ mit einem Styrolanteil von 10 bis 50, bevorzugt 20 bis 40 Gew.-%, bezogen auf das Zweiblockcopolymer, oder
c) eine Mischung aus dem unter a) beschriebenen Zweiblockcopolymer mit einem Styrol-Butadien-Styrol-Dreiblockcopolymer S-B-S mit einem Styrolanteil von 5 bis 75, bevorzugt 20 bis 50 Gew.-%,bezogen auf das Dreiblockcopolymer. Besonders bevorzugt verwendet man als Dreiblockcopolymer ein Polymer S₁-B-S₂, bei dem der Styrolblock S₁ ein gewichtmittleres Molekulargewicht Mw von 20.000 bis 200.000, bevorzugt 50.000 bis 120.000, der Butadienblock B ein Mw von 30.000 bis 300.000, bevorzugt 100.000 bis 200.000, und der Styrolblock S₂ ein Mw von 1.000 bis 100.000, bevorzugt 5.000 bis 30.000, aufweist.

Bei den Styrol-Butadien-Blockcopolymeren, beim Polybutadien und beim Polyisopren erlaubt das erfindungsgemäße Verfahren darüberhinaus eine Steuerung des Gehaltes an 1,2-Vinylverknüpfungen im Polybutadien bzw. Polyisopren. Da die mechanischen Eigenschaften dieser Polymere auch vom 1,2-Vinylgehalt des Polybutadiens bzw. Polyisoprens bestimmt werden, ermöglicht das Verfahren demnach die Herstellung von Polybutadien, Polyisopren bzw. Styrol-Butadien-Blockcopolymeren mit maßgeschneiderten Eigenschaften.

Verwendet man beispielsweise - nicht erfindungsgemäß - anstelle der erfindungsgemäßen Initiatorzusammensetzung Natriummetall in Tetrahydrofuran, so weist ein derart hergestelltes Polyisopren einen hohen Gehalt an 1,2-Vinylverknüpfungen auf, was ein anderes Eigenschaftsprofil ergibt, insbesondere andere mechanische Eigenschaften.

Die erfindungsgemäßen Polymere zeichnen sich außerdem durch einen geringen Gehalt an Restmonomeren bzw. -oligomeren aus. Dieser Vorteil fällt insbesondere bei den styrolhaltigen Polymeren PS, HIPS und P-S-B ins Gewicht, weil der geringe Gehalt an Styrol-Restmonomeren und Styrol-Oligomeren eine nachträgliche Entgasung - z.B. auf einem Entgasungsextruder, verbunden mit höheren Kosten und nachteiliger thermischer Schädigung des Polymeren (Depolymerisation) - überflüssig macht.

Die Polymere können übliche Zusatzstoffe und Verarbeitungshilfsmittel enthalten, z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Geeignete Gleit- und Entformungsmittel sind z.B. Stearinsäuren, Stearylalkohol, Stearinsäureester oder -amide, Metallstearate, Montanwachse und solche auf Basis von Polyethylen und Polypropylen.

Pigmente sind beispielsweise Titandioxid, Phthalocyanine, Ultramarinblau, Eisenoxide oder Ruß, sowie die Klasse der organischen Pigmente. Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolcopolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol^{®} oder Irganox^{®} im Handel erhältlich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin^{®} kommerziell erhältlich sind.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-is(hydroxyalkyl)alkylamine oder -alkylenamine, Polyethylenglycolester oder Glycerinmono- und -distearate, sowie deren Mischungen.

Die einzelnen Zusatzstoffe werden in den jeweils üblichen Mengen verwendet, so daß sich nähere Angaben hierzu erübrigen.

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Bevorzugt werden die Komponenten, gegebenenfalls mit den erwähnten Zusatzstoffen, in einem Extruder oder einer anderen Mischvorrichtung bei Temperaturen von 100 bis 320°C unter Aufschmelzen vermischt, und ausgetragen. Die Verwendung eines Extruders ist besonders bevorzugt.

Aus den Formmassen lassen sich Formkörper (auch Halbzeuge, Folien, Filme und Schäume) aller Art herstellen.

Gegenstand der Erfindungen sind demnach auch die Verwendung der erfindungsgemäßen Polymere zur Herstellung von Formkörpern, Folien, Fasern und Schäume, sowie die aus den Polymeren erhältlichen Formkörper, Folien, Fasern und Schäume.

### Beispiele

### 1. Herstellung von Initiatorzusammensetzungen

Es wurden folgende Verbindungen verwendet:
Lithiumhydrid (LiH) und Natriumhydrid (NaH) als Feststoff von Fa. Aldrich,
Triisobutylaluminium (TIBA) als fertige 1,0 molare Lösung in Toluol von Fa. Aldrich,
Toluol von BASF, gereinigt und getrocknet mit Aluminiumoxid.

### Allgemeine Vorschrift zu den Beispielen I1 bis I6

Das Alkalimetallhydrid (Art und Menge siehe Tabelle 1) wurde mit einer 1,0 molaren Lösung von TIBA in Toluol (Menge der Lösung siehe Tabelle 1) bei 25°C unter Rühren zusammengegeben und die Mischung nach Zugabe von Toluol (Menge siehe Tabelle 1) bei 50°C 24 Stunden lang gerührt. Man erhielt eine Initiatorlösung, die als solche weiterverwendet wurde. Das Molverhältnis von Aluminium zu Alkalimetall ist in Tabelle 1 angegeben. Es wurde unter Feuchtigkeitsausschuß in einer Stickstoffatmosphäre in einer glovebox gearbeitet.

**Tabelle 1: Initiatorzusammensetzungen**

| Bsp. | Alkalimetallhydrid | TIBA-Lösung | Toluol | Molverh. Al/Li bzw. Al/Na |
|---|---|---|---|---|
| I1 | 0,8 g LiH | 40 ml | 960 ml | 0,4:1 |
| I2 | 0,8 g LiH | 70 ml | 930 ml | 0,7:1 |
| I3 | 0,8 g LiH | 90 ml | 910 ml | 0,9:1 |
| I4 | 2,4 g NaH | 40 ml | 960 ml | 0,4:1 |
| I5 | 2,4 g NaH | 70 ml | 930 ml | 0,7:1 |
| I6 | 2,4 g NaH | 90 ml | 910 ml | 0,9:1 |

### 2. Polymerisation von Monomeren

Es wurden die unter 1 angegebenen bzw. folgende Verbindungen verwendet:
Styrol, Isopren und 1,3-Butadien von BASF, jeweils gereinigt und getrocknet mit Aluminoxan,
sec-Butyllithium von Fa. FMC,
Methanol und Isopropanol von BASF,
Cyclohexan von BASF, gereinigt und getrocknet mit Aluminoxan, Tetrahydofuran (THF) von BASF.

Alle Polymerisationen wurden unter Feuchtigkeitsausschluß unter Stickstoffatmosphäre in einer glovebox durchgeführt.

Die nachfolgend angegebenen Molekulargewichte der Polymere (Gewichtsmittel M_{w} und Zahlenmittel Mₙ) wurden mittels Gelpermeationschromatographie (GPC) bestimmt. Die Einzelheiten waren wie folgt: Eluent Tetrahydrofuran; Flußrate 1,2 ml/min; RI- bzw. UV-Detektor; drei Styroldivinylbenzolgel-Trennsäulen (35°C, je 300 x 8 mm) PLgel Mixed B von Fa. Polymer Laboratories; Kalibration mit Polystyrolstandards, Polyisoprenstandards bzw. Polybutadienstandards je nach erhaltenem Polymeren.

Aus M_{w} und Mₙ wurde die Uneinheitlichkeit M_{w}/Mₙ berechnet.

Der Styrolanteil der Kautschuke, wurde durch Auswertung von ¹H-Kernresonanzspektren (NMR nuclear magnetic resonance) bestimmt. Der Gehalt an 1,2-Vinylverknüpfungen im Polybutadien, im Polyisopren bzw. im Butadienanteil des Styrol-Butadien-Blockcopolymers wurde durch ¹³C-Kernresonanzspektroskopie bestimmt.

### 2a) Herstellung von Polystyrol (PS)

### Allgemeine Vorschrift zu den Beispielen PS1 bis PS9V

Zu 27 ml Toluol wurden unter Rühren bei 100°C eine der zuvor in Beispiel I1 bis I6 hergestellten Initiatorlösungen - bzw. bei den Beispielen PS8V und PS9V Initiator als Feststoff - (Art und Menge siehe Tabelle 2) und monomeres Styrol (Menge siehe Tabelle 2) gegeben. Die Abnahme der Styrolkonzentration wurde gravimetrisch verfolgt. Nach einer bestimmten Reaktionsdauer (siehe Tabelle 2) wurde die Polymerisation durch Zugabe von 1 ml Methanol abgebrochen. Tabelle 2 enthält den zu diesem Zeitpunkt erreichten Umsatz. Von der erhaltenen Polymermischung wurden durch GPC-Analyse die Molekulargewichte M_{w} und Mₙ bestimmt und die Uneinheitlichkeit M_{w}/Mₙ berechnet, siehe Tabelle 2.

**Tabelle 2: Polystyrol (n.b. nicht bestimmt, V zum Vergleich)**

| Bsp | Initiatorlösung* | Styrol | Reaktionsdauer | Umsatz | Mₙ [g/mol] | M_{w}/Mₙ |
|---|---|---|---|---|---|---|
| PS1 | 3 ml I1 | 3,5 ml | 5 h | 13 % | 1800 | 1,3 |
| PS2 | 3 ml I2 | 3,5 ml | 5 h | 8 % | 1000 | 1,2 |
| PS3 | 3 ml I3 | 3,5 ml | 24 h | 15 % | 1600 | 1,1 |
| PS4 | 3 ml I3 | 35 ml | 260 h | 95 % | 120.000 | 1,2 |
| PS5 | 3 ml I4 | 3,5 ml | 2 h | 82 % | 6800 | 1,3 |
| PS6 | 3 ml I5 | 3,5 ml | 2 h | 41 % | 6800 | 1,3 |
| PS7 | 3 ml I6 | 3,5 ml | 2 h | 20 % | 2000 | 1,2 |
| PS8V | 0,1 g LiH | 3,5 ml | 24 h | < 1 % | n.b. | n.b. |
| PS9V | 0,1 g NaH | 3,5 mal | 24 h | < 1 % | n.b. | n.b. |

| | | | | | | |
|---|---|---|---|---|---|---|
| * Beispiele PS8V und PS9V: Initiator als Feststoff | | | | | | |

Die Beispiele zeigen, daß Polystyrolpolymere mit geringer Uneinheitlichkeit und "maßgeschneiderten" Molekulargewichten erhalten werden.

Mit steigendem Gehalt der Initiatorzusammensetzung an Aluminiumorganyl (Molverhältnisse Al/Li bzw. Al/Na in den Beispielen PS1 bzw. PS5 0,4:1, PS2 bzw. PS6 0,7:1, PS3 bzw. PS7 0,9:1) nimmt der Umsatz innerhalb der Reihen PS1 bis PS3 bzw. PS5 bis PS7 erwartungsgemäß ab, da das Al-organyl als Retarder wirkt. (Bei Beispiel PS3 ist der Umsatz nur aufgrund der wesentlich längeren Polymerisationsdauer, 24 h statt 5 h, höher).

Beispiel PS4 unterscheidet sich von Beispiel PS3 durch die höhere Monomermenge und die längere Reaktionsdauer. Auf diese Weise lassen sich Polymere mit hohem Molekulargewicht herstellen.

Der Vergleich von LiH (Reihe PS1 bis PS3) mit NaH (Reihe PS5 bis PS7) ergibt, daß NaH - sogar trotz kürzerer Polymerisationsdauer - höhere Umsätze und höhere Molekulargewichte liefert als LiH.

Die Vergleichsbeispiele PS8V und PS9V illustrieren, daß die Monomeren nicht polymerisieren (kein Umsatz nach 24 h), wenn man - nicht erfindungsgemäß - LiH bzw. NaH ohne Aluminiumorganyl verwendet.

### 2b) Herstellung von Polyisopren (PI)

### Allgemeine Vorschrift zu den Beispielen PI1 bis PI3

Zu 27 ml Toluol wurden unter Rühren bei 80°C eine Initiatorlösung (Art und Menge sie Tabelle 3) und monomeres Isopren (Menge siehe Tabelle 3) gegeben. Die Abnahme der Isoprenkonzentration wurde gravimetrisch verfolgt. Nach einer bestimmten Reaktionsdauer (siehe Tabelle 3) wurde die Polymerisation durch Zugabe von 1 ml Methanol abgebrochen. Tabelle 3 enthält den zu diesem Zeitpunkt erreichten Umsatz. Von der erhaltenen Polymermischung wurden durch GPC-Analyse M_{w} und Mₙ bestimmt und die Uneinheitlichkeit berechnet, siehe Tabelle 3, sowie durch ¹³C-NMR die Anteile der verschiedenen Vinylverknüpfungen bestimmt.

**Tabelle 3: Polyisopren**

| Bsp. | Initiatorlösung | Isopren | Reaktionsdauer | Umsatz | Mₙ [g/mol] | M_{w}/Mₙ | Vinylverknüpfungen |
|---|---|---|---|---|---|---|---|
| PI1 | 3 ml I1 | 8 ml | 7 Tage | 9 % | 49.000 | 1,2 | 0% 1,2-Vinyl |
| | | | | | | | 90% 1,3-trans |
| | | | | | | | 10% 3,4-trans |
| PI2* | 3 ml I1 | 8 ml | 7 Tage | 76 % | 47.000 | 1,2 | 1,6% 1,2-Vinyl |
| | | | | | | | 59,6% 1,4-trans |
| | | | | | | | 38,9% 3,4-trans |
| PI3 | 2,5 ml I4 | 8 ml | 4 Tage | 70 % | 46.000 | 1,3 | 3,5% 1,2-Vinyl |
| | | | | | | | 43% 1,4-trans |
| | | | | | | | 53,5% 3,4-trans |

| | | | | | | | |
|---|---|---|---|---|---|---|---|
| * Dem Ansatz wurden außerdem 10 mol eq/Li THF zugefügt | | | | | | | |

Die Beispiele illustrieren, daß die Polyisoprenpolymere geringe Uneinheitlichkeit und maßgeschneiderte Molekulargewichte aufweisen.

Durch Zusatz von THF in beispiel PI2, verglichen mit Beispiel PI1, lassen sich Anteile von 1,2-, 1,4-trans- und 3,4-trans-Verknüpfungen verändern und so die Mikrostruktur des Polymeren steuern, und der Umsatz erhöhen.

Verwendet man NaH statt LiH in der Initiatorzusammensetzung, können höhere Umsätze erzielt werden: in Beispiel PI3 (mit NaH) ist der Umsatz trotz erheblich kürzerer Polymerisationsdauer höher als in Beispiel PI1 (mit LiH).

### 2c) Herstellung von Polybutadien (PB)

### Beispiel PB1

Zu 27 ml Toluol wurden unter Rühren bei 80°C 3 ml der Initiatorlösung I5 und soviel monomeres Butadien gegeben, daß die Butadienkonzentration in der Mischung 1 mol/l betrug. Die Abnahme der Butadienkonzentration wurde gravimetrisch verfolgt. Nach 2 Tagen Reaktionsdauer wurde die Polymerisation durch Zugabe von 1 ml Methanol abgebrochen. Der erreichte Umsatz betrug 10 %. Durch ¹³C-NMR wurden 25 % 1,2-Vinylverknüpfungen und 55 % 1,4-trans-Verknüpfungen ermittelt.

### 2d) Herstellung von Styrol-Butadien-Blockcopolymeren (PSB)

### Allgemeine Vorschrift zu den Beispielen PSB1 bis PSB4

Lineare Blockcopolymere wurden durch sequentielle Polymerisation von Styrol bzw. Butadien-Styrol-Gemischen hergestellt. Dazu wurde 500 ml Cyclohexan vorgelegt und gerührt. Tabelle 4a fasst die bei den einzelnen Blöcken verwendeten Initiatoren, Monomeren und Temperaturen zusammen. Die Monomeren und Initiatoren für den nächsten Block wurden erst zugefügt, nachdem die Monomeren für den vorherigen Block verbraucht waren. Bei den Beispielen PSB1 und PSB2 wurde die Reaktion schließlich mit Isopropanol abgebrochen. Die Tabelle 4b enthält außerdem den Blockaufbau der erhaltenen Polymere und die Gewichtsanteile der einzelnen Blöcke am Blockpolymeren.

In Tabelle 4a bedeutet
- I5:: Initiatorlösung aus Beispiel I5
- 1 M TIBA:: 1,0 molare Lösung von TIBA in Toluol
- B :: momomeres Butadien
- S:: monomeres Styrol
- } :: gemeinsame Zugabe.

In Tabelle 4b bedeutet:
- S₁, S₂, S₃ :: Styrolblock
- (B/S)₁, (B/_{S})2:: Butadien-Styrol-Block.

**Tabelle 4a: Styrol-Butadien-Blockcopolymere**

| Bsp. | IPSB1 | PSB2 | IPSB3 | IPSB4 |
|---|---|---|---|---|
| Block 1 | | | | |
| - Initiator | 16 ml I5 | 16 ml I5 | 13 ml I5 | 13 ml I5 |
| - Monomere | 36 g S | 16 g S | 78 g S | 79 g S |
| - Temp. | 100°C | 100°C | 100°C | 100°C |

| Block 2 | | | | |
|---|---|---|---|---|
| - Initiator | 0,3 ml 1M TIBA | 0,3 ml 1M TIBA | 45 ml I5 | 45 ml I5 |
| - Monomere | 23 g B | 23 g B | 46 g S | 50 g S |
| | 23 g S^{}} | 23 g S^{}} | | |
| - Temp. | 120°C | 120°C | 120°C | 120°C |

| Block 3 | | | | |
|---|---|---|---|---|
| - Initiator | - | - | 1 ml 1M TIBA | 1 ml 1 M TIBA |
| - Monomere | 23 g B | 23 g B | 23 g B | 34 g B |
| | 23 g S^{}} | 23 g S^{}} | 23 g S^{}} | 34 g S^{}} |
| - Temp. | 120°C | 120°C | 120°C | 120°C |

| Block 4 | | | | |
|---|---|---|---|---|
| - Initiator | - | - | - | - |
| - Monomere | 74 g S | 90 g S | 26 g S | - |
| - Temp. | 120°C | 120°C | 120°C | - |

**Tabelle 4b: Blockaufbau der Blockcopolymere**

| Beispiel | Blockaufbau und Gewichtsanteile der Blöcke am Blockcopolymeren [Gew.-%] |
|---|---|
| PSB1 | S₁- (B/S)₁- (B/S)₂-S₂ |
| | 18- 23- 23- 36 |
| PSB2 | S₁-(B/S)₁-(B/S)₂-S₂ |
| | 8- 23- 23- 46 |
| PSB3 | S₁-S₂- (B/S)₂-S₃ |
| | 39-23- 25- 13 |
| PSB4 | S₁-S₂- (B/S)₂ |
| | 40-26- 34 |

Aus den linearen Blockcopolymeren PSB3 bzw. PSB4 wurden durch Kopplungsreaktion der lebenden Polymerketten sternförmige Blockcopolymere hergestellt, wobei epoxidiertes Leinsamenöl als Kopplungsmittel (Edenol® B316 von Fa. Henkel) verwendet wurde. Im Einzelnen wurde vorgegangen wie in der WO-A 00/58380, Beispiel 6 bis 8 auf Seite 8 bis 9 beschrieben.

Die Beispiele zeigen, daß sich durch entsprechende Monomerenwechsel und Initiatoren maßgeschneiderte Styrol-Butadien-Blockcopolymere herstellen lassen. Sie können zu sternförmigen Polymeren umgesetzt werden.

Dabei müssen nicht alle Blöcke nach dem erfindungsgemäßen Verfahren hergestellt werden. Vielmehr kann man den einen Block erfindungsgemäß mit einem Alkalimetallhydrid-Aluminiumorganyl-Initiator herstellen, den anderen Block jedoch nach anderen Verfahren.

### 2e) Herstellung von schlagzähem Polystyrol (HIPS)

Als Kautschukkomponente wurden Styrol-Butadien-Blockcopolymere K verwendet, wobei die Blockcopolymere K1, K2 und K3 nicht erfindungsgemäß unter Verwendung von sec-Butyllithium hergestellt wurden.

Kautschuke K1 und K2: lineare, in monomerem Styrol gelöste Butadien-Styrol-Zweiblockcopolymere B-S

Für K1 wurde vorgegangen wie beschrieben in der DE-A 100 22 504, Beispiel K1 auf Seite 4, Zeilen 10-25. Für K2 wurde vorgegangen wie beschrieben in der DE-A 100 22 504, Beispiel K3 auf Seite 4, Zeilen 42-56. Die Molekulargewichte M_{w} betrugen beim Kautschuk K1: Polybutadienblock 100.000, Polystyrolblock 85.000, und beim Kautschuk K2: Polybutadienblock 160.000, Polystyrolblock 95.000.

Kautschuk K3: lineares, in monomerem Styrol gelöstes Styrol-Butadien-Styrol-Dreiblockcopolymer S-B-S

Es wurde vorgegangen wie beschrieben in der DE-A 100 22 504, Beispiel K5 auf Seite 5, Zeilen 6-20. Die Molekulargewichte M_{w} betrugen: erster Styrolblock 15.000, Butadienblock 120.000, zweiter Styrolblock 70.000.

Das HIPS wurde durch kontinierliche Polymerisation hergestellt, indem Styrol nach dem erfindungsgemäßen Verfahren in Gegenwart der vorstehenden Kautschuke K1, K2 bzw. K3 nach folgender Vorschrift polymerisiert wurde.

### Beispiele HI1 bis HI3

In einem 1,9 1-Rührkessel wurden unter Rühren kontinuierlich
für HI1 363 g/h, für HI2 380 g/h, für HI3 361 g/h

Styrol und
für HI1 653 g/h der Kautschuklösung K1,
für HI2 661 g/h der Kautschuklösung K2,
für HI3 688 g/h der Kautschuklösung K3

und 35 ml/h
des Initiators I3 für HI1,
des Initiators I6 für HI2,
des Initiators I3 für HI3
eindosiert und bei 90°C (HI2: 93°C) gehalten. Die Mischung hatte einen Feststoffgehalt von
41 Gew.-% für HI1, 43 Gew.-% für HI2, 40 Gew.-% für HI3
und wurde in einem gerührten 4 1-Turmreaktor weiter gefördert, der mit zwei gleichgroßen Heizzonen (erste Zone 120°C, zweite Zone 160°C Innentemperatur) versehen war. Der Austrag des Reaktors wurde mit 10 g/h einer 10 Gew.-%igen Lösung von Methanol in Toluol versetzt, danach durch einen Mischer, in den 2,5 Gew.-%, bezogen auf die Reaktionsmischung, Mineralöl eindosiert wurden, und schließlich durch ein auf 240°C beheiztes Rohrstück geleitet. Schließlich wurde über ein Durchregelventil in einen bei 10 mbar betriebenen Vakuumtopf entspannt. Die Schmelze wurde mit einer Förderschnecke ausgetragen und granuliert. Der Umsatz war quantitativ.

Die Polystyrol-Matrix hatte ein Molekulargewicht M_{w} von
168.000 für HI1, 163.000 für HI2, 175.000 für HI3
und eine Uneinheitlichkeit M_{w}/Mₙ von
2,8 für HI1, 2,6 für HI2, 2,7 für HI3.

In allen drei Beispielen betrug der Restmonomergehalt < 5 ppm Styrol und < 5 ppm Ethylbenzol.

### Beispiel HI4:

Beispiel HI3 wurde wiederholt mit dem Unterschied, daß der Initiator I6 verwendet wurde.

### 4. Eigenschaften der hergestellten HIPS-Polymere

Aus den HIPS-Granulaten wurden gepresste Probekörper nach DIN 16770 Teil 1 und gespritzte Probekörper nach ISO 3167 hergestellt.

Die Streckspannung und die Reißdehnung wurden nach DIN 53455 bei 23°C bestimmt.

Der Oberflächenglanz wurde ermittelt durch Glanzmessung mit einem Reflektometer micro-TRI-gloss von Fa. BYK-Gardner als Reflektometerwerte nach DIN 67530 bei 60° und 20° Beobachtungswinkel.

Die Lochkerbschlagzähigkeit wurde nach DIN 53753 bei 23°C an gepressten Platten 50x6x4 mm und 3 mm Lochdurchmesser durchgeführt.

Die Wärmeformbeständigkeit Vicat B der Proben wurde mittels der Vicat-Erweichungstemperatur ermittelt. Die Vicat-Erweichungstemperatur wurde nach DIN 53 460, Methode B, mit einer Kraft von 49,05 N und einer Temperatursteigerung von 50 K je Stunde an Normkleinstäben bestimmt.

Die Fließfähigkeit der Formmassen wurde als Melt Volume Index (MVI) nach DIN 53 735 bei einer Temperatur von 260°C und 5 kg Belastung bestimmt.

Tabelle 5 fasst die Ergebnisse zusammen.

**Tabelle 5: HIPS-Eigenschaften (n.b. nicht bestimmt)**

| Beispiel | HI1 | HI2 | HI3 | HI4 |
|---|---|---|---|---|
| Streckspannung [N/mm²] | 32,1 | 32,5 | 30,3 | 29,5 |
| Oberflächenglanz [%] bei 60°/20° | 91/62 | n.b. | n.b. | n.b. |
| Reißdehnung [%] | 11 | 23 | 25 | 32 |
| Lochkerbschlagzähigkeit [kJ/m²] | 4,5 | 12,6 | 15,1 | 14,7 |
| MVI [ml/10 min] | 7,6 | 6,4 | 4,8 | 5,2 |
| Vicat B [°C] | 89 | 91 | 91 | 90 |

Die Beispiele belegen, daß sich mit dem erfindungsgemäßen Verfahren Polymere mit maßgeschneiderten mechanischen und thermischen Eigenschaften herstellen lassen.

## Patentansprüche

1. Verfahren zur anionischen Homo- oder Copolymerisation von Styrolmonomeren oder Dienmonomeren oder deren Mischungen in Gegenwart einer Initiatorzusammensetzung, wobei die Initiatorzusammensetzung mindestens ein Alkalimetallhydrid ausgewählt aus LiH, NaH und KH, und mindestens ein Aluminiumorganyl, enthält und das Molverhältnis von Aluminiumorganyl zu Alkalimetallhydrid 0,01:1 bis 5:1 beträgt.

2. Verfahren nach Anspruch 1, wobei als Aluminiumorganyl Triisobutylaluminium verwendet wird.

3. Verfahren nach den Ansprüchen 1 oder 2, wobei als Styrolmonomeres Styrol verwendet wird.

4. Verfahren nach den Ansprüchen 1 bis 3, wobei als Dienmonomeres Butadien oder Isopren oder deren Mischung verwendet wird.

## Claims

1. A process for the anionic homo- or copolymerization of styrene monomers or of diene monomers or mixtures of these in the presence of an initiator composition, where the initiator composition comprises at least one alkali metal hydride selected from LiH, NaH, and KH, and at least one organylaluminum compound, and the molar ratio of organylaluminum compound to alkali metal hydride is from 0.01:1 to 5 :1.

2. The process as claimed in claim 1, where triisobutylaluminum is used as organylaluminum compound.

3. The process as claimed in claim 1 or 2, where styrene is used as styrene monomer.

4. A process as claimed in any of clams 1 to 3, where butadiene or isoprene or a mixture of these is used as diene monomer.

## Revendications

1. Procédé d'homopolymérisation ou de copolymérisation anionique de monomères à base de styrène ou de diène ou de leurs mélanges en présence d'une composition d'initiateur, la composition d'initiateur contenant au moins un hydrure de métal alcalin, choisi parmi LiH, NaH et KH, et au moins un aluminiumorganyle, et le rapport molaire d'aluminiumorganyle à hydrure de métal alcalin étant de 0,01:1 à 5:1.

2. Procédé selon la revendication 1, où on utilise comme aluminiumorganyle du triisobutylaluminium.

3. Procédé selon les revendications 1 ou 2, où on utilise comme monomère de styrène du styrène.

4. Procédé selon les revendications 1 à 3, où on utilise comme monomère de diène du butadiène ou de l'isoprène ou lieur mélangé.
